# FASCICULE DE BREVET EUROPEEN

(11) **EP 1 637 378 B1**
(45) Date de publication et mention de la délivrance du brevet: **15.04.2009**
(21) Numéro de dépôt: 05300616.9
(22) Date de dépôt: 22.07.2005
(51) Int. Cl.: B60J 7/11

(54) **Cassette pour toit ouvrant de véhicule automobile avec un panneau ouvrant amovible et un déflecteur amovible**
Einbaueinheit mit abnehmbaren Dachdeckel und abnehmbaren Windabweiser für KFZ-Dächer
Unit with detachable roof panel and detachable wind deflector for vehicle roofs

(30) Priorité: 16.09.2004 FR 0409817
(43) Date de publication de la demande: 22.03.2006
(73) Titulaire: RENAULT S.A.S., 92100 Boulogne Billancourt (FR)
(72) Inventeur: Chanoni, Véronique, 91460 MARCOUSSIS (FR); Ballanger, Florent, 91470 LIMOURS (FR); Maniscalco, Alessia, 91350 GRIGNY (FR); Decouvelaere, Freddy, 28410 BU (FR)

(56) Documents cités:
- DE-A1- 1 755 422
- DE-A1- 2 741 442
- DE-A1- 3 132 774
- DE-A1- 19 626 937
- DE-C1- 3 908 239
- US-A- 4 781 410
- US-A1- 2004 135 403

## Description

L'invention concerne une cassette pour toit ouvrant de véhicule automobile pourvue d'un déflecteur amovible et un véhicule pourvu d'une telle cassette.

Une cassette de toit ouvrant contient le panneau de toit ouvrant et le mécanisme de fixation et d'ouverture de ce dernier. Elle est formée d'un cadre qui délimite l'ouverture obturée par le panneau ouvrant et dans lequel le mécanisme de fixation et d'ouverture du panneau est logé. Le panneau ouvrant peut être monté coulissant pour dégager l'ouverture, tel que décrit dans le document EP-490 213. Il peut également être monté de manière amovible, tel que décrit dans les documents GB-1 492 333 ou FR-2 234 152.

Lorsque le panneau ouvrant est ouvert ou ôté, et que le véhicule est en mouvement, il se produit un phénomène aéroacoustique de battement, qui est lié à la résonance entre le flux d'air se décollant au niveau de l'ouverture du toit ouvrant et la cavité intérieure de l'habitacle. Des déflecteurs de toits ouvrants sont alors utilisés pour diminuer ce phénomène aéroacoustique.

Ces déflecteurs sont montés de manière définitive tel que décrit dans le document EP-490 213ou encore dans le document DE2741442. La solution décrite dans ce document n'est toutefois pas optimale, notamment en terme de coût.

D'autres déflecteurs sont montés mobiles entre une position repliée dans la cassette qui les protège, et une position déployée hors de cette cassette du côté du bord avant de l'ouverture du toit ouvrant, légèrement inclinée vers l'arrière du véhicule. Un déflecteur de ce genre est par exemple décrit dans le document DE-196 26 937. Un tel agencement nécessite une cassette suffisamment grande pour accueillir le déflecteur dans sa position repliée de sorte que cette intégration n'est pas toujours possible dans une cassette de faibles dimensions.

L'invention vise à pallier ces inconvénients en proposant une cassette de toit ouvrant pourvue d'un déflecteur amovible. Le déflecteur peut ainsi être monté uniquement lorsque le toit ouvrant est ouvert, et être rangé dans l'habitacle du véhicule lorsqu'il n'est pas utilisé. Il n'est donc plus nécessaire de prévoir un rangement pour le déflecteur dans la cassette, mais seulement des moyens de fixation, de sorte qu'une économie de montage est réalisée ainsi qu'un gain de place.

A cet effet, un premier objet de l'invention concerne une cassette de toit ouvrant de véhicule automobile formée d'un cadre comportant des fixations adaptées pour coopérer avec un panneau ouvrant apte à obturer une ouverture, et d'un déflecteur, ledit déflecteur étant destiné à être placé sur le bord transversal avant du cadre à proximité de l'ouverture ; le cadre de la cassette et le déflecteur sont pourvus de moyens de fixation complémentaires coopérant de manière amovible, les moyens de fixation étant conçus pour permettre une mise en place et un enlèvement directement à la main du déflecteur ; le panneau ouvrant est pourvu de moyens de fixation semblables à ceux du déflecteur de manière à pouvoir être monté de manière amovible dans les mêmes moyens de fixation du cadre de la cassette. L'utilisateur peut ainsi aisément mettre en place le déflecteur sans outils et sans l'aide d'un professionnel. De plus, l'invention permet de simplifier davantage la réalisation de la cassette et de réduire son encombrement et son coût, des fixations semblables étant utilisées à la fois par le déflecteur et le panneau ouvrant.

Avantageusement, dans un premier mode de réalisation, les moyens de fixation sont formés de parties mâle et femelle complémentaires s'emboîtant et comprennent des moyens d'encliquetage ou de verrouillage. La fixation peut alors être réalisée de manière simple sans risque de déboîtement intempestif.

De préférence, le cadre de la cassette est pourvu de fentes aptes à coopérer avec des pattes de fixation solidaires du déflecteur ou du panneau ouvrant. La fixation est alors réalisée de manière très simple.

Dans un mode de réalisation particulier, les pattes sont en forme de L, dont la base s'étend dans une direction transversale, et cette base est bloquée dans la fente au moyen d'un loquet coulissant dans la fente suivant la direction transversale. Le verrouillage est ainsi réalisé simplement et rapidement.

De préférence, les axes des éléments d'encliquetage s'étendent suivant la direction transversale. Un faible pivotement d'un panneau ouvrant utilisant ces moyens de fixation peut ainsi également être obtenu de manière à autoriser son ouverture.

L'invention concerne également un véhicule automobile pourvu d'une cassette selon l'invention.

L'invention est maintenant décrite en référence aux dessins annexés, non limitatifs, dans lesquels :
- la figure 1 est une vue schématique en perspective du dessus d'un pavillon de véhicule automobile pourvu d'un mode de réalisation d'une cassette de toit ouvrant selon l'invention ;
- la figure 2a est une vue de face du déflecteur amovible de la figure 1, la cassette étant représentée en coupe, et la figure 2b est une vue similaire représentant le panneau ouvrant installé dans les mêmes fixations de la cassette que le déflecteur de la figure 2a ;
- les figures 3 et 4 sont des vues en coupe longitudinale du déflecteur et de la cassette selon les lignes A-A et B-B de la figure 2a ;
- les figures 5 et 6 sont des vues en coupe du panneau ouvrant et de la cassette selon la ligne C-C de la figure 2b, le panneau ouvrant étant respectivement dans les positions fermée et entrebâillée ;
- la figure 7 est une vue de face d'un déflecteur amovible pour une cassette selon l'invention selon un deuxième mode de réalisation ;
- la figure 8 est une vue en coupe du déflecteur et de la cassette suivant la ligne D-D de la figure 7 ;
- la figure 9 est une vue en coupe similaire à la figure 8 représentant une autre variante des moyens de fixation du déflecteur et de la cassette;
- la figure 10 est une vue de face d'un déflecteur amovible pour une cassette selon l'invention selon un troisième mode de réalisation ;
- la figure 11 est une vue en coupe du déflecteur et de la cassette suivant la ligne E-E de la figure 10 ;
- la figure 12 est une vue similaire de la figure 11 représentant une variante des moyens de fixation.

On définit par X, Y, Z, les directions longitudinale, transversale et verticale du véhicule, la direction X étant dirigée vers l'arrière du véhicule. Les termes avant et arrière se réfèrent à l'avant et l'arrière du véhicule respectivement. Les différents éléments sont décrits dans une position correspondant à leur position de montage dans le véhicule.

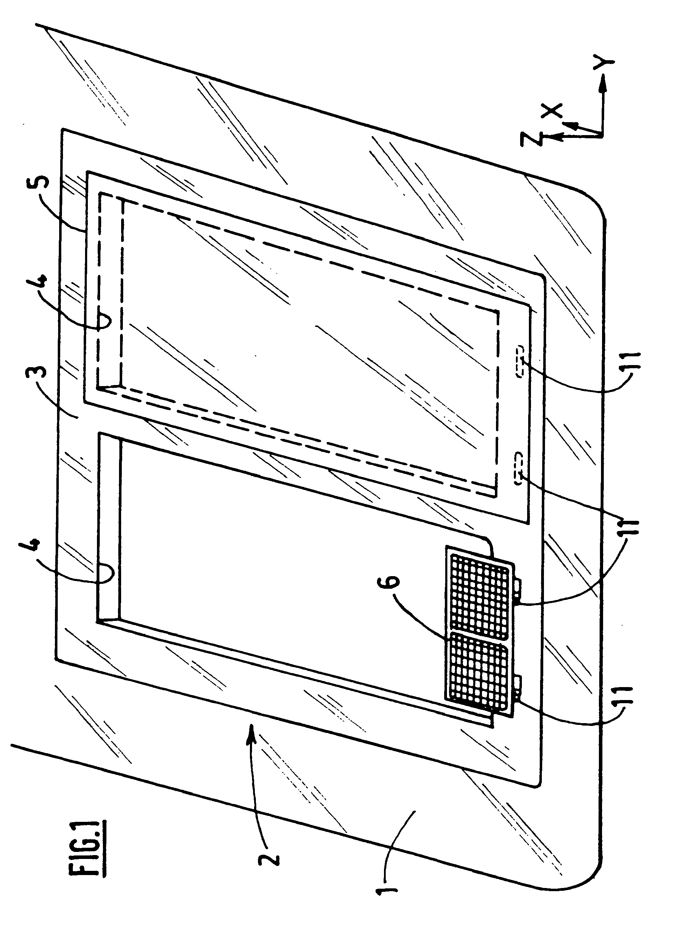

La figure 1 représente, vu de dessus, le pavillon 1 d'un véhicule automobile dans lequel est encastré de manière connue une cassette de toit ouvrant 2. Cette cassette 2 est formée d'un cadre 3 délimitant deux ouvertures 4. Chaque ouverture 4 peut être obturée par un panneau ouvrant amovible 5, dont un seul est représenté sur la figure 1. Un déflecteur 6 est monté sur le cadre 3 en avant de l'autre ouverture 4 de cette figure.

Dans l'exemple, chaque panneau ouvrant 5 et chaque déflecteur 6 est fixé sur le cadre 3 par des moyens de fixation communs logés dans le cadre 3.

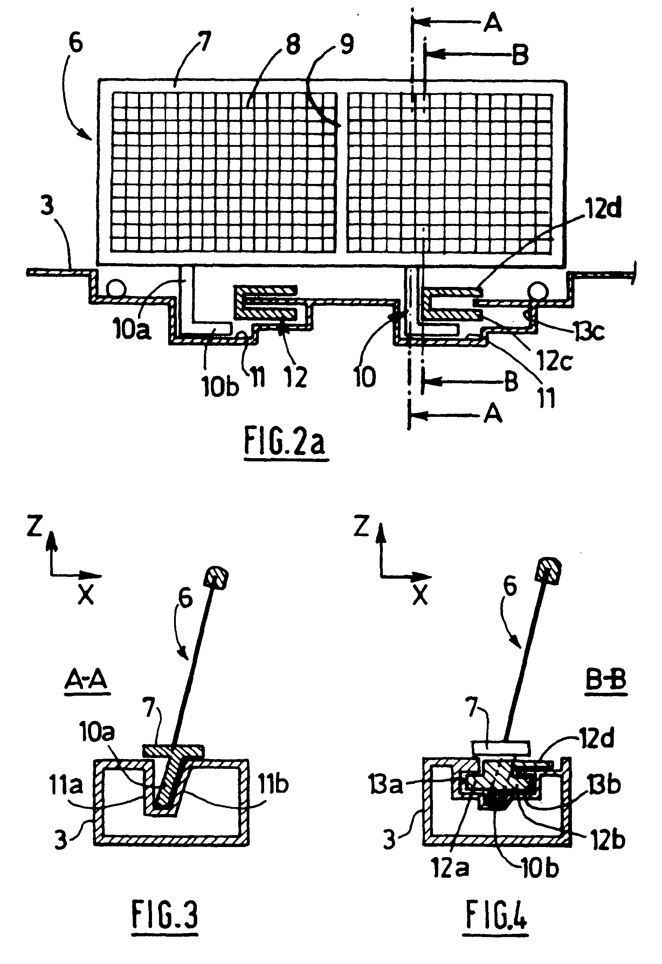

Le déflecteur 6 est décrit en référence à la figure 2a. Il est formé d'un cadre rigide 7 sur lequel est fixé un filet 8. Un montant 9 central permet de renforcer la structure du cadre. Le filet 8 est fixé sur le cadre de manière classique. Par exemple, le cadre peut être formé de deux moitiés qui viennent s'encliqueter en pinçant le filet.

La partie inférieure du cadre 7 est pourvue de moyens de fixation 10. Ces moyens sont formés de deux pattes 10 espacées suivant la direction transversale. Ces pattes sont sensiblement identiques et sont chacune sensiblement en forme de L, et s'étendent sensiblement dans le même plan que le filet 8 et son cadre 7. Chaque patte 10 présente ainsi un montant 10a et une base 10b

Les bases 10b des pattes en L 10 s'étendent parallèlement à la direction transversale Y, dans le même sens tel que visible sur la figure 2a.

Le cadre 3 de la cassette se présente sous la forme d'un profilé creux qui supporte les moyens de fixation du panneau ouvrant et du déflecteur. Ces moyens de fixation sont formés de deux fentes 11 pour chaque ouverture 4. Ces fentes sont espacées suivant la direction transversale Y et présentent une section dans le plan XY de forme générale rectangulaire, sensiblement complémentaire de la base des pattes de fixation 10 du déflecteur. Au niveau du montant 10a de chaque patte 10, la paroi avant 11a de la fente est sensiblement droite, tandis que sa paroi arrière 11b est légèrement inclinée vers l'arrière par rapport au plan vertical YZ de sorte que le déflecteur soit incliné vers l'arrière du véhicule lorsque le montant 10a de la patte est en appui sur cette paroi tel que représenté sur la figure 3. Bien entendu, les pattes 10 et les fentes 11 peuvent présenter une orientation différente permettant d'obtenir une telle inclinaison du déflecteur.

La profondeur de chaque fente est sensiblement identique à la hauteur de chaque patte 10 de sorte que le bord inférieur du cadre 7 du déflecteur puisse venir en appui contre les bords de la fente, tel que représenté sur la figure 3. On peut également prévoir une patte d'appui solidaire de l'arrière du cadre du déflecteur et destinée à venir en appui contre le cadre de la cassette afin de limiter le fléchissement du déflecteur sous l'effet de la poussée de l'air.

Afin de maintenir chaque patte 10 dans la fente 11 correspondante, un loquet de verrouillage 12 est prévu afin de fermer la fente 11 au niveau de la base 10b des pattes 10. Dans l'exemple, il s'agit d'un loquet coulissant parallèlement à la direction transversale Y de la fente.

A cet effet, chaque fente 11 est pourvue de deux rainures avant 13a et arrière 13b, respectivement, situées de part et d'autre de la patte 10 tel que visible figure 4, et d'une troisième rainure 13c formée dans le prolongement de la base du L de chaque patte, au dessus de celle-ci, tel que visible figure 2a. Les rainures 13a, 13b coopèrent avec des languettes latérales correspondantes 12a, 12b respectivement du loquet. Dans la troisième rainure 13c, coulisse une paroi inférieure 12c du loquet, reliée à une paroi supérieure 12d superposée, de sorte que la paroi supérieure de la rainure 13c, qui forme la paroi externe de la cassette, est prise en sandwich entre les parois 12c et 12d (figure 2a).

La paroi supérieure 12d est réalisée suffisamment grande pour servir de prise aux doigts d'un utilisateur, pour le déplacement du loquet. Sur la figure 2a, le loquet 12 situé du côté gauche de la figure est en position de déverrouillage, tandis que l'autre loquet 12 est en position de verrouillage, la base 10b de la patte étant maintenue dans le fond de la fente par la paroi inférieure 12c du loquet 12.

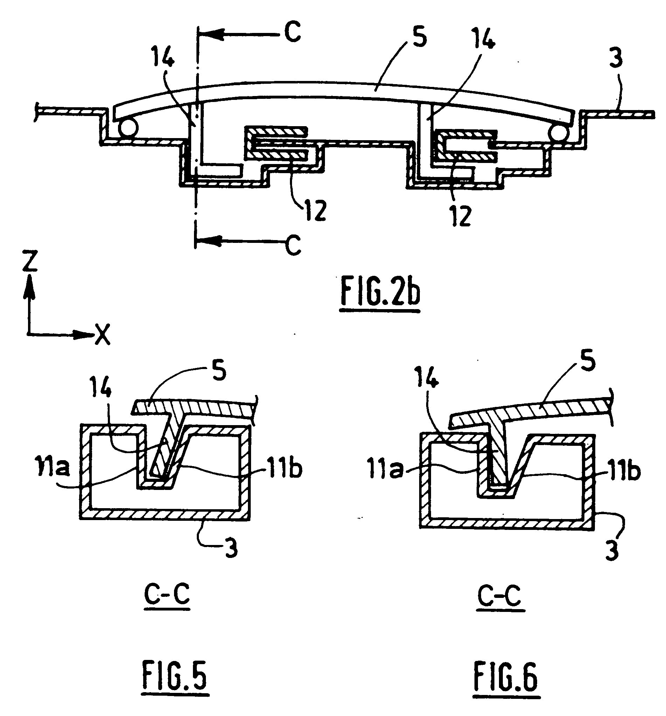

La figure 2b représente un panneau ouvrant 5 pourvu de pattes de fixation 14 similaires à celles du déflecteur de la figure 2a. Le panneau 5 est alors également verrouillé en coulissant les loquets 12, ces derniers restant montés en permanence sur la cassette. De plus, les parois avant droite 11a et arrière inclinée 11b de la fente 11 permettent une légère rotation du panneau ouvrant 5, tel que représenté sur les figures 5 et 6. Il est ainsi possible de maintenir le panneau ouvrant 5 dans une position entrebâillée (figure 6).

De préférence, les pattes 10, 14 sont suffisamment hautes pour ménager un espace entre le déflecteur, respectivement le panneau ouvrant, et la cassette, afin de permettre un accès facile des doigts de l'utilisateur aux loquets 12.

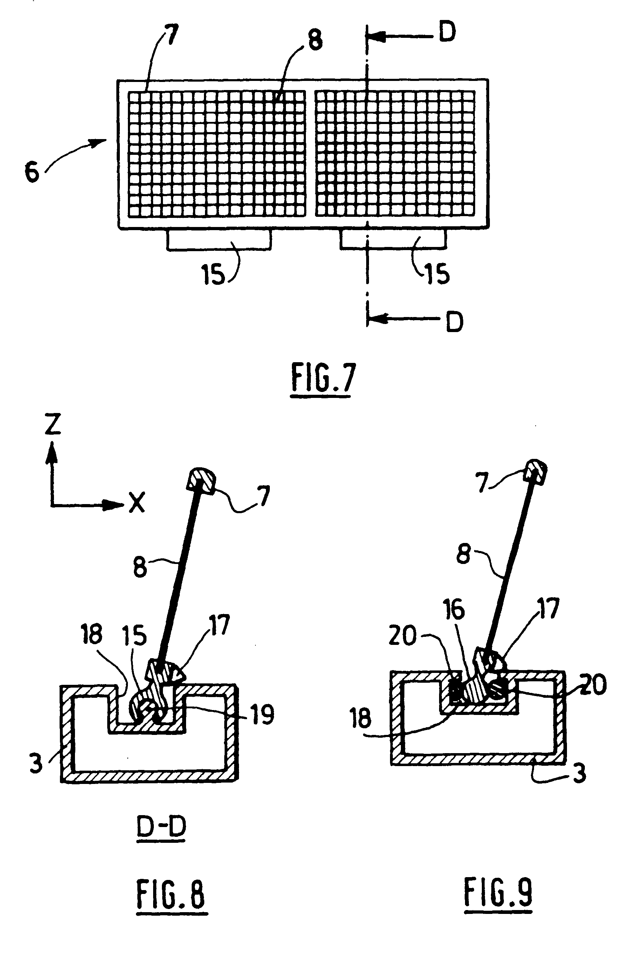

Un deuxième mode de réalisation des moyens de fixation est décrit en référence aux figures 7 à 9. Dans ce mode de réalisation, les moyens de fixation sont des moyens d'encliquetage.

Dans une première variante représentée figure 8, les moyens de fixation sont formés de deux cylindres creux 15 d'axe transversal Y ouverts sur toute leur longueur du côté opposé au déflecteur. Dans une deuxième variante représentée figure 9, ils sont formés de deux cylindres pleins 16 d'axe transversal. Dans les deux variantes, la face arrière de la partie inférieure du cadre est de préférence pourvue d'une ou plusieurs pattes 17 destinées à prendre appui sur le cadre 3 de la cassette afin de limiter le fléchissement du déflecteur sous l'effet de la poussée de l'air.

Dans la première variante, le cadre 3 de la cassette comprend une fente ou logement 18 ouvert sur sa face supérieure dans le fond duquel est fixé un cylindre 19 d'axe transversal et dont le diamètre est sensiblement égal au diamètre interne du cylindre creux 15 du déflecteur. Ce dernier peut ainsi être encliqueté sur le cylindre 19 (figure 8).

Dans la deuxième variante, le logement 18 présente des protubérances 20 sur ses parois latérales opposées parallèles au plan YZ, conformées de manière à permettre l'encliquetage des cylindres 16 dans les logements 18 (figure 9).

Dans les deux variantes, le montage permet également un faible pivotement du panneau ouvrant autour d'un axe parallèle à la direction transversale Y, et ainsi l'entrebâillement du panneau.

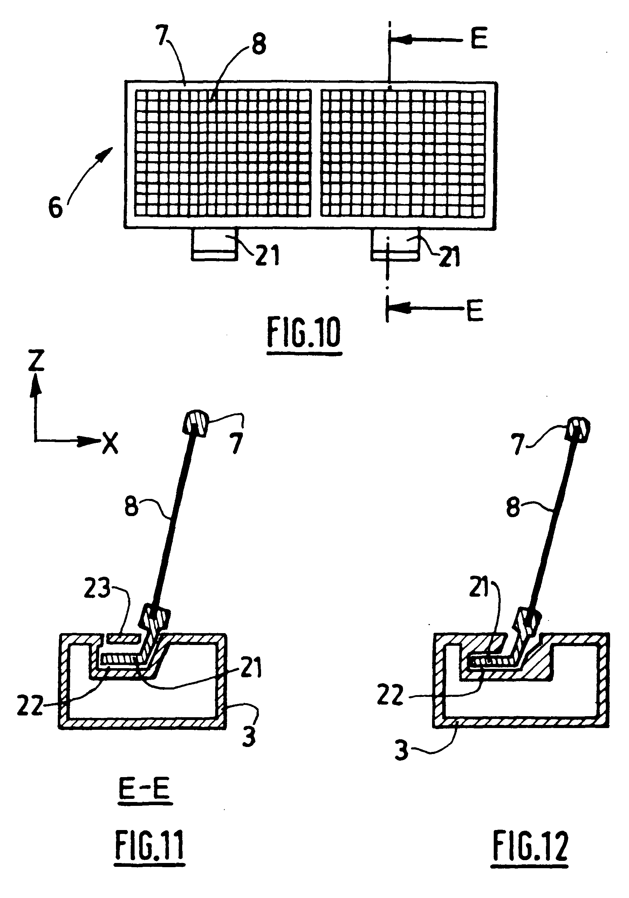

Un troisième mode de réalisation des moyens de fixation est décrit en référence aux figures 10 à 12. Le déflecteur est pourvu de pattes d'emboîtement 21 solidaires de la partie inférieure du cadre, dont l'extrémité s'étend sensiblement horizontalement vers l'avant du véhicule, tel que visible sur les figures 11 et 12.

Dans une variante représentée figure 11, chaque patte 21 vient s'emboîter dans une fente ou logement 22 du cadre 3 de la cassette, et est maintenue par un moyen de verrouillage formé d'un volet 23 qui ferme le logement 18 au dessus de la partie horizontale de la patte 21. Ce volet peut par exemple être ouvert et fermé par coulissement.

Dans la variante représentée figure 12, le logement 22 présente une forme correspondant sensiblement à celle de l'extrémité horizontale de la patte 21.

Dans les deux variantes, le logement 22 est de préférence conformé de sorte que l'arrière de la patte 21 soit au moins en partie en appui contre la paroi du logement afin de limiter les efforts subis par l'extrémité de la patte lors d'un fléchissement du déflecteur.

Selon la figure 1, le déflecteur et le panneau ouvrant sont montés en utilisant les mêmes moyens de fixation logés dans la cassette. Le panneau ouvrant est alors pourvu de moyens de fixation semblables à ceux du déflecteur. Les dimensions de la cassette, en particulier dans la direction longitudinale X, peuvent alors être réduites.

## Revendications

1. Cassette de toit ouvrant de véhicule automobile (2) formée d'un cadre (3) comportant des fixations adaptées pour coopérer avec un panneau ouvrant (5) apte à obturer une ouverture (4) dans le cadre (3), et d'un déflecteur (6), ledit déflecteur étant destiné à être placé sur le bord transversal avant du cadre à proximité de l'ouverture, le cadre de la cassette et le déflecteur étant pourvus de moyens de fixation complémentaires coopérant de manière amovible, les moyens de fixation étant conçus pour permettre une mise en place et un enlèvement directement à la main du déflecteur, **caractérisée en ce que** le panneau ouvrant (5) est pourvu de moyens de fixation semblables à ceux du déflecteur de manière à pouvoir être monté de manière amovible dans les mêmes moyens de fixation du cadre de la cassette.

2. Cassette selon la revendication 1, **caractérisée en ce que** les moyens de fixation sont formés de parties mâle et femelle complémentaires s'emboîtant et comprennent des moyens d'encliquetage ou de verrouillage.

3. Cassette selon la revendication 2, **caractérisée en ce que** le cadre de la cassette est pourvu de fentes aptes à coopérer avec des pattes de fixation solidaires du déflecteur ou du panneau ouvrant.

4. Cassette selon la revendication 3, **caractérisée en ce que** les pattes (10, 14) sont en forme de L, dont la base s'étend dans une direction transversale (Y) et **en ce que** cette base est bloquée dans la fente (11) au moyen d'un loquet (12) coulissant dans la fente suivant la direction transversale.

5. Cassette selon la revendication 3, **caractérisée en ce que** les axes des éléments d'encliquetage s'étendent suivant la direction transversale.

6. Cassette selon l'une quelconque des revendications 1 à 5, **caractérisée en ce que** le panneau ouvrant (5) est monté de manière amovible.

7. Véhicule automobile **caractérisé en ce qu'**il est pourvu d'une cassette selon l'une des revendications 1 à 6.

## Claims

1. Motor vehicle opening-roof cassette (2) formed by a frame (3) having fastenings adapted to cooperate with an opening panel (5) capable of closing off an opening (4) in the frame (3), and by a deflector (6), the said deflector being intended to be placed on the front transverse edge of the frame close to the opening, the cassette frame and the deflector being provided with complementary fastening means which cooperate in a detachable manner, the fastening means being designed to allow a direct manual positioning and removal of the deflector, **characterized in that** the opening panel (5) is provided with fastening means similar to those of the deflector such that it can be mounted in a detachable manner in the same fastening means of the cassette frame.

2. Cassette according to Claim 1, **characterized in that** the fastening means are formed by interlocking complementary male and female parts and comprise snap-fitting or locking means.

3. Cassette according to Claim 2, **characterized in that** the cassette frame is provided with slots designed to cooperate with fastening tabs secured to the deflector or to the opening panel.

4. Cassette according to Claim 3, **characterized in that** the tabs (10, 14) are in the shape of an L, the base of which extends in a transverse direction (Y), and **in that** this base is immobilized in the slot (11) by means of a latch (12) which slides in the slot in the transverse direction.

5. Cassette according to Claim 3, **characterized in that** the axes of the snap-fitting elements extend in the transverse direction.

6. Cassette according to any one of Claims 1 to 5, **characterized in that** the opening panel (5) is mounted in a detachable manner.

7. Motor vehicle, **characterized in that** it is provided with a cassette according to one of Claims 1 to 6.

## Patentansprüche

1. Schiebedacheinheit für ein Kraftfahrzeug (2), die durch einen Rahmen (3), der Halterungen aufweist, die zum Zusammenwirken mit einem Schiebedeckel (5), der eine Öffnung (4) in dem Rahmen (3) bedecken kann, ausgeführt sind, und einen Windabweiser (6) gebildet wird, wobei der Windabweiser auf dem Querrand des Rahmens in der Nähe der Öffnung platziert werden soll, wobei der Rahmen der Einheit und der Windabweiser mit komplementären Befestigungsmitteln versehen sind, die lösbar zusammenwirken, wobei die Befestigungsmittel dazu konzipiert sind, ein direktes Anbringen und Abnehmen des Windabweisers von Hand zu gestatten, **dadurch gekennzeichnet, dass** der Schiebedeckel (5) mit Befestigungsmitteln versehen ist, die jenen des Windabweisers ähneln, um lösbar in die gleichen Befestigungsmittel des Rahmens der Einheit montiert werden zu können.

2. Einheit nach Anspruch 1, **dadurch gekennzeichnet, dass** die Befestigungsmittel durch einen Steckteil und einen Aufnahmeteil, die komplementär sind, ineinander geschachtelt werden und Rast- oder Verriegelungsmittel umfassen, gebildet werden.

3. Einheit nach Anspruch 2, **dadurch gekennzeichnet, dass** der Rahmen der Einheit mit Schlitzen versehen ist, die mit fest mit dem Windabweiser oder dem Schiebedeckel verbundenen Befestigungsnasen zusammenwirken können.

4. Einheit nach Anspruch 3, **dadurch gekennzeichnet, dass** die Nasen (10, 14) eine L-Form aufweisen, deren Basis sich in einer Querrichtung (Y) erstreckt, und dass diese Basis mittels einer in dem Schlitz in Querrichtung gleitenden Arretierung (12) in dem Schlitz (11) verriegelt wird.

5. Einheit nach Anspruch 3, **dadurch gekennzeichnet, dass** sich die Achsen der Rastelemente in Querrichtung erstrecken.

6. Einheit nach einem der Ansprüche 1 bis 5, **dadurch gekennzeichnet, dass** der Schiebedeckel (5) lösbar angebracht ist.

7. Kraftfahrzeug, **dadurch gekennzeichnet, dass** es mit einer Einheit nach den Ansprüchen 1 bis 6 versehen ist.
